(19) Europäisches Patentamt
European Patent Office
Office européen des brevets

(11) EP 4 746 063 A1

(12) **EUROPEAN PATENT APPLICATION**

(43) Date of publication:
**20.05.2026 Bulletin 2026/21**

(21) Application number: **25216742.4**

(22) Date of filing: **18.11.2025**

(51) International Patent Classification (IPC):
***H01M 4/131*** *(2010.01)* ***H01M 4/62*** *(2006.01)*
***H01M 10/0525*** *(2010.01)*

(52) Cooperative Patent Classification (CPC):
**H01M 4/131; H01M 4/622; H01M 4/625;**
**H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.11.2024 KR 20240165458**

(71) Applicant: **SAMSUNG SDI CO., LTD.**
**Yongin-si, Gyeonggi-do 17084 (KR)**

(72) Inventors:
- **SEOL, Jongheon**
  **17084 Yongin-si, Gyeonggi-do (KR)**
- **KIM, Minjae**
  **17084 Yongin-si, Gyeonggi-do (KR)**
- **YANG, Mihwa**
  **17084 Yongin-si, Gyeonggi-do (KR)**

(74) Representative: **Michalski Hüttermann & Partner Patentanwälte mbB**
**Kaistraße 16A**
**40221 Düsseldorf (DE)**

# (54) POSITIVE ELECTRODE SLURRY COMPOSITION FOR RECHARGEABLE LITHIUM BATTERY, POSITIVE ELECTRODE, AND RECHARGEABLE LITHIUM BATTERY MANUFACTURED USING SAME

(57) Provided are a positive electrode slurry composition for a rechargeable lithium battery, a positive electrode manufactured using the positive electrode, and a rechargeable lithium battery. The positive electrode slurry composition for a rechargeable lithium battery includes two types of hydrogenated nitrile butadiene rubber derivatives having different weight average molecular weights, a conductive material, a positive electrode active material, and a dispersion medium.

【FIG. 1】

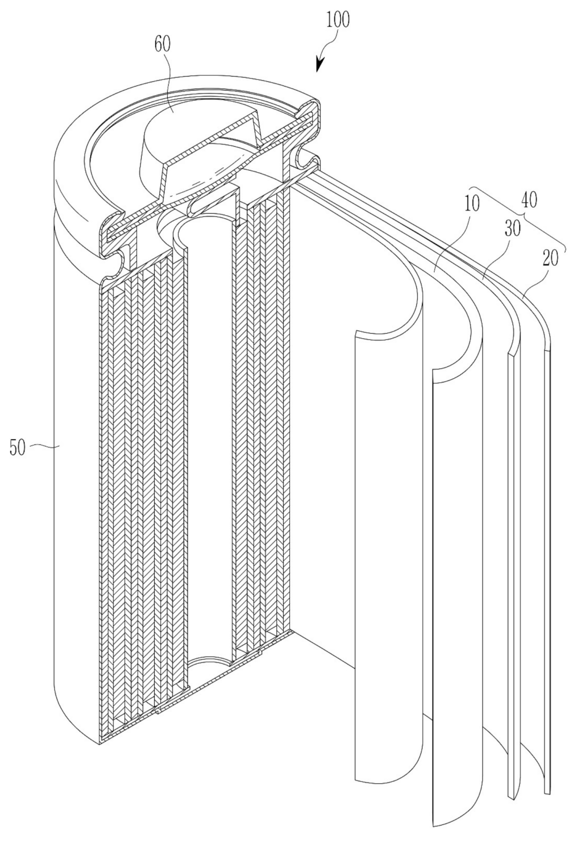


EP 4 746 063 A1

## Description

## BACKGROUND

### 1. Field

A positive electrode slurry composition for a rechargeable lithium battery, a positive electrode manufactured using the positive electrode slurry, and a rechargeable lithium battery are disclosed.

### 2. Description of the Related Art

A rechargeable lithium battery may be recharged and has three or more times as high energy density per unit weight as a conventional lead storage battery such as, e.g., nickel-cadmium battery, nickel hydrogen battery, nickel zinc battery, and the like. A rechargeable lithium battery may be also charged at a high rate, and is commercially manufactured for a laptop, a cell phone, an electric tool, an electric bike, and the like. Accordingly, improving the energy density of a rechargeable lithium battery may be advantageous.

A rechargeable lithium battery is manufactured by injecting an electrolyte into an electrode assembly, which includes a positive electrode including a positive electrode active material capable of intercalating/deintercalating lithium ions and a negative electrode including a negative electrode active material capable of intercalating/deintercalating lithium ions.

In general, in a positive electrode slurry composition for manufacturing the positive electrode, a hydrogenated nitrile butadiene rubber is used as a dispersant for dispersing a conductive material, and polyvinylidene fluoride is used as a binder.

However, when applying a high-nickel (high-Ni)-based positive electrode active material with a large amount of residual lithium in the form of LiOH, $Li_2CO_3$, and the like, there may be issues of producing HF by a reaction between the corresponding residual lithium and the polyvinylidene fluoride, which modifies the polyvinylidene fluoride, changing viscosity of the positive electrode slurry composition, leading to the gelation thereof, and deteriorating coating processability.

## SUMMARY

Some example embodiments include a positive electrode slurry composition for a rechargeable lithium battery that reduces or suppresses viscosity changes in the positive electrode slurry composition while maintaining the dispersibility of a conductive material.

Some example embodiments include a positive electrode slurry composition for a rechargeable lithium battery, including two types of hydrogenated nitrile butadiene rubber derivatives having different weight average molecular weights, a conductive material, a positive electrode active material, and a dispersion medium.

Some example embodiments include a positive electrode for a rechargeable lithium battery manufactured using the positive electrode slurry composition according to the aforementioned example embodiments.

Some example embodiments include a rechargeable lithium battery including a positive electrode according to the aforementioned example embodiments.

The positive electrode slurry composition for a rechargeable lithium battery including two types of hydrogenated nitrile butadiene rubber derivatives as described above can reduce or suppress viscosity changes in the positive electrode slurry composition and improve coating processability.

Accordingly, the positive electrode and the rechargeable lithium battery manufactured using the positive electrode slurry composition for a rechargeable lithium battery according to the aforementioned example embodiments can exhibit desired or improved cycle-life characteristics.

## BRIEF DESCRIPTION OF THE DRAWINGS

FIGS. 1 to 4 are schematic views illustrating rechargeable lithium batteries according to some example embodiments.

## DETAILED DESCRIPTION

Hereinafter, example embodiments of the present disclosure are described in detail. However, these embodiments are examples, the present invention is not limited thereto, and the present invention is defined by the scope of claims.

As used herein, when a specific definition is not otherwise provided, it is understood that when an element such as a layer, film, region, or substrate is referred to as being "on" another element, the element can be directly on the other element, or intervening elements may also be present therebetween.

As used herein, when a specific definition is not otherwise provided, the singular may also include the plural. In addition, unless otherwise specified, "A or B" may mean "including A, including B, or including A and B."

As used herein, "combination thereof" may indicate a mixture, a stack, a composite, a copolymer, an alloy, a blend, or a reaction product of constituents.

As used herein, when a definition is not otherwise provided, a particle diameter may be an average particle diameter. In addition, the particle diameter may refer to an average particle diameter (D50), which indicates the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device may be used to perform a data analysis, and the number of particles is counted for each particle size range. From this, the average particle diameter (D50) value may be readily obtained through a calculation. Alternatively, the average particle diameter can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

In this specification, the weight average molecular weight (Mw) of the binder may be a value measured using, e.g., the gel permeation chromatography (GPC) method.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

**Positive Electrode Slurry Composition for Rechargeable Lithium Battery:**

Some example embodiments include a positive electrode slurry composition for a rechargeable lithium battery including two types of hydrogenated nitrile butadiene rubber derivatives having different weight average molecular weights, a conductive material, a positive electrode active material, and a dispersion medium.

Among the two types of hydrogenated nitrile butadiene rubber derivatives, the one having a relatively small weight average molecular weight may constitute a dispersant for the conductive material, and the one having a relatively large weight average molecular weight may constitute a binder and replace polyvinylidene fluoride.

Accordingly, the positive electrode slurry composition for a rechargeable lithium battery including the two types of hydrogenated nitrile butadiene rubber derivatives may reduce or suppress viscosity changes in the positive electrode slurry composition and improve coating processability.

Hereinafter, a positive electrode slurry composition for a rechargeable lithium battery according to the aforementioned example embodiments is described in detail.

Hydrogenated Nitrile Butadiene Rubber Derivative

The two types of hydrogenated nitrile butadiene rubber derivatives may include a first hydrogenated nitrile butadiene rubber derivative having a weight average molecular weight in a range of $\geq$ 100,000 g/mol to $\leq$ 400,000 g/mol, or $\geq$ 100,000 g/mol to $\leq$ 200,000 g/mol; and a second hydrogenated nitrile butadiene rubber derivative having a weight average molecular weight in a range of $\geq$ 250,000 g/mol to $\leq$ 1,000,000 g/mol.

When the weight average molecular weight of the first hydrogenated nitrile butadiene rubber derivative is less than the lower limit of the above range, the first hydrogenated nitrile butadiene rubber derivative is not suitable for dispersing a conductive material, and even when a conductive material dispersion is prepared and stored, the conductive material may be coagulated, resulting in poor viscosity and particle size stability.

Meanwhile, when the weight average molecular weight of the second hydrogenated nitrile butadiene rubber derivative is less than the lower limit, the second hydrogenated nitrile butadiene rubber derivative is not suitable for dispersion in the slurry composition, which may affect an increase in positive electrode resistance and a decrease in adhesive strength.

A weight ratio of the first hydrogenated nitrile butadiene rubber derivative and the second hydrogenated nitrile butadiene rubber derivative may be in a range of $\geq$ 1:1 to $\leq$ 1:20, $\geq$ 1:3 to $\leq$ 1:15, or $\geq$ 1:5 to $\leq$ 1:12.

In this range, a synergistic effect can be realized by mixed use of the first hydrogenated nitrile butadiene rubber derivative and the second hydrogenated nitrile butadiene rubber derivative.

Based on 100 wt% of a total amount of the positive electrode slurry composition, the first hydrogenated nitrile

butadiene rubber derivative may be included in an amount in a range of ≥ 0.01 wt% to ≤ 0.5 wt%, ≥ 0.05 to ≤ 0.3 wt%, or ≥ 0.05 to ≤ 0.1 wt; and the second hydrogenated nitrile butadiene rubber derivative may be included in an amount in a range of ≥ 0.1 wt% to ≤ 5 wt%, ≥ 0.5 to ≤ 3 wt%, or ≥ 1 to ≤ 1.5 wt%.

Within this range, a synergistic effect can be realized by mixed use of the first hydrogenated nitrile butadiene rubber derivative and the second hydrogenated nitrile butadiene rubber derivative.

The first hydrogenated nitrile butadiene rubber derivative and the second hydrogenated nitrile butadiene rubber derivative may each independently include a first structural unit derived from acrylonitrile represented by Chemical Formula 1; a second structural unit including a hydrogenated butadiene-derived structural unit represented by Chemical Formula 2A and a butadiene-derived structural unit represented by Chemical Formula 2B; a third structural unit represented by Chemical Formula 3; and a fourth structural unit represented by Chemical Formula 4:

Chemical Formula 1:

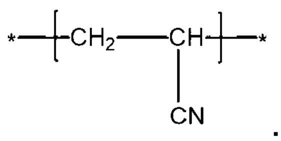

Chemical Formula 2A:

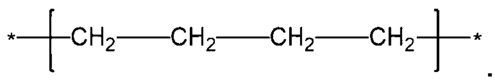

Chemical Formula 2B:

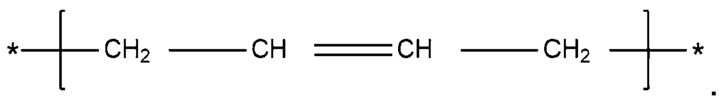

Chemical Formula 3:

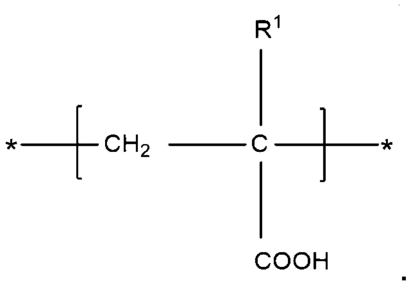

Chemical Formula 4:

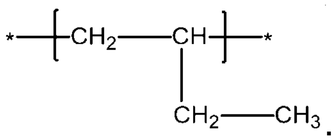

In Chemical Formula 3, $R^1$ is or includes hydrogen, a substituted or unsubstituted C1 to C20 alkyl group, an ester group (-COOR, where R is a substituted or unsubstituted C1 to C20 alkyl group), a cyano group (-CN), a pyrrolidonyl group ($-C-_3H_5NHCO$), a carboxyl group (-COOH), a caprolactamyl group ($-NCOC_5H_{10}$), a morpholinyl group $-NC_4H_8O$), a hydroxyl group (-OH), an amino group ($-NH_2$), a vinyl group ($-CH=CH_2$), an epoxy group ($-COCH_2$), or a thiol group (-SH).

The first hydrogenated nitrile butadiene rubber derivative and the second hydrogenated nitrile butadiene rubber derivative each independently further include a repeating unit represented by Chemical Formula 3 compared to the hydrogenated nitrile butadiene rubber itself, wherein the carboxyl group (-COOH) of Chemical Formula 3 is a functional group that contributes to improving adhesive strength.

Accordingly, the first hydrogenated nitrile butadiene rubber derivative and the second hydrogenated nitrile butadiene rubber derivative may each independently have a higher adhesive strength than the hydrogenated nitrile butadiene rubber itself.

For example, the first hydrogenated nitrile butadiene rubber derivative and the second hydrogenated nitrile butadiene rubber derivative may each independently include the first structural unit in an amount in a range of ≥ 20 wt% to ≤ 40 wt%, for example, ≥ 25 wt% to ≤ 40 wt%, ≥ 30 wt% to ≤ 40 wt%, or ≥ 30 wt% to ≤ 35 wt%, based on 100 wt% of the rubber derivative. Based on the hydrogenated carboxylated nitrile butadiene rubber, when the first structural unit is included in an amount that is less than about 20 wt%, the electrolyte resistance may deteriorate, and when the first structural unit is included in an amount that is greater than about 40 wt%, the mechanical properties such as flexibility of the positive electrode may deteriorate.

For example, the first hydrogenated nitrile butadiene rubber derivative and the second hydrogenated nitrile butadiene rubber derivative may each independently include the second structural unit in an amount in a range of ≥ 30 wt% to ≤ 78 wt%, for example, ≥ 30 wt% to ≤ 70 wt%, ≥ 40 wt% to ≤ 70 wt%, ≥ 50 wt% to ≤ 70 wt%, or ≥ 50 wt% to ≤ 60 wt%, based on 100 wt% of the rubber derivative. When the second structural unit is included in the above numerical range based on 100 wt% of the above hydrogenated carboxylated nitrile butadiene rubber, a conductive material such as CNT may be dispersed as desired within the electrode plate.

For example, the first hydrogenated nitrile butadiene rubber derivative and the second hydrogenated nitrile butadiene rubber derivative may each independently include the third structural unit in an amount in a range of ≥ 2 wt% to ≤ 10 wt%, for example, ≥ 3 wt% to ≤ 10 wt%, ≥ 4 wt% to ≤ 10 wt%, or ≥ 4 wt% to ≤ 8 wt%, based on 100 wt% of the rubber derivative. Based on 100 wt% of the hydrogenated carboxylated nitrile butadiene rubber, when the third structural unit is included in an amount that is less than about 2 wt%, the adhesive strength of the binder may decrease, and when it is included in an amount that is greater than about 10 wt%, the adhesive strength of the binder may increase excessively, resulting in a problem in that the flexibility of the electrode plate decreases.

For example, the first hydrogenated nitrile butadiene rubber derivative and the second hydrogenated nitrile butadiene rubber derivative may each independently include the fourth structural unit in an amount in a range of ≥ 0 wt% to ≤ 20 wt%, for example, ≥ 1 wt% to ≤ 15 wt%, ≥ 5 wt% to ≤ 20 wt%, ≥ 5 wt% to ≤ 15 wt%, or ≥ 5 wt% to ≤ 10 wt%, based on 100 wt% of the rubber derivative. Based on 100 wt% of the above hydrogenated carboxylated nitrile butadiene rubber, when the fourth structural unit is not included, the flexibility of the electrode plate may be reduced and the dispersibility of a conductive material such as CNT within the electrode plate may be reduced, and when the fourth structural unit is included in an amount greater than about 20 wt%, the adhesive strength of the binder may be reduced.

In some example embodiments, the first hydrogenated nitrile butadiene rubber derivative and the second hydrogenated nitrile butadiene rubber derivative each independently include greater than or equal to 90 wt% and less than 100 wt% of the hydrogenated butadiene-derived structural unit represented by Chemical Formula 2A, based on 100 wt% of the second structural unit, and include greater than about 0 wt% and less than or equal to ≤ 10 wt% of the butadiene-derived structural unit represented by Chemical Formula 2B, based on 100 wt% of the second structural unit.

When the butadiene-derived structural unit represented by Chemical Formula 2B is not included in the second structural unit (0 wt%), the pi-pi bond between the conductive material (CNT) and butadiene may be difficult, resulting in poor CNT dispersibility within the electrode plate. When the butadiene-derived structural unit represented by Chemical Formula 2B is included in an amount of greater than ≥ 10 wt%, the solubility of the binder in a solvent (e.g., NMP) within the positive electrode composition may be poor, resulting in poor CNT wetting.

The first hydrogenated nitrile butadiene rubber derivative and the second hydrogenated nitrile butadiene rubber derivative may each independently be represented by Chemical Formula A.

Chemical Formula A:

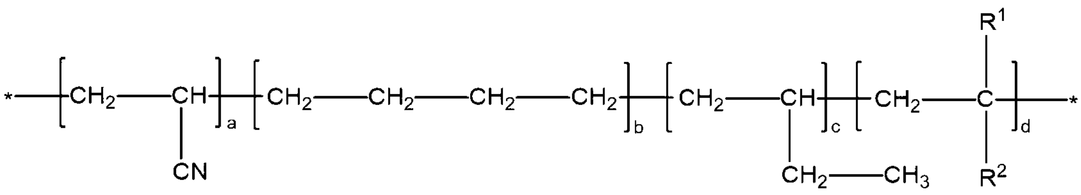

In Chemical Formula A, the definitions of $R^1$ and $R^2$ are as described above. For example, $R^1$ may be or include a methyl group and $R^2$ may be or include a carboxyl group (-COOH).

Additionally, in Chemical Formula A, "a" to "d" may each independently be an integer from 1 to 20.

## Conductive Material

The conductive material is included to provide electrode conductivity, and any electrically conductive material may be used as a conductive material unless the conductive material causes a chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

For example, the carbon nanotube may be used as the conductive material, and in this case, the conductive material dispersion can be prepared in the presence of the hydrogenated nitrile butadiene rubber derivative and applied to the positive electrode slurry to improve the positive electrode conductivity.

A weight ratio of the first hydrogenated nitrile butadiene rubber derivative and the conductive material may be in a range of ≥ 1:1 to ≤ 1:10, or ≥ 3:1 to ≤ 7:1.

In this range, the dispersibility of the conductive material can be improved by the first hydrogenated nitrile butadiene rubber derivative.

## Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNi_bCo_cL^1_{d-}G_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); and $Li_aFePO_4$ ($0.90 \le a \le 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1_{y1}M^2_{z1}O_{2-b1}X_{b1}$.

In Chemical Formula 11, $0.9 \le a1 \le 1.8$, $0.3 \le x1 \le 1$, $0 \le y1 \le 0.7$, $0 \le z1 \le 0.7$, $0.9 \le x1+y1+z1 \le 1.1$, and $0 \le b1 \le 0.1$, $M^1$ and $M^2$ each independently are or include one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, $0.6 \leq x1 \leq 1$, $0 \leq y1 \leq 0.4$, and $0 \leq z1 \leq 0.4$, or $0.8 \leq x1 \leq 1$, $0 \leq y1 \leq 0.2$, and $0 \leq z1 \leq 0.2$.

Chemical Formula 12: $Li_{a2}Co_{x2}M^3_{y2}O_{2-b2}X_{b2}$.

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: $Li_{a3}Fe_{x3}M^4_{y3}PO_{4-b3}X_{b3}$.

In Chemical Formula 13, $0.9 \leq a3 \leq 1.8$, $0.6 \leq x3 \leq 1$, $0 \leq y3 \leq 0.4$, and $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: $Li_{a4}Ni_{x4}Mn_{y4}M^5_{z4}O_{2-b4}X_{b4}$.

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes an element such as or including at least one of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to ≤ 80 mol%, greater than or equal to ≤ 85 mol%, greater than or equal to ≤ 90 mol%, greater than or equal to ≤ 91 %, or greater than or equal to ≤ 94 mol% and less than or equal to ≤ 99 mol%, based on 100 mol% of metal excluding lithium in the lithium transition metal composite oxide. The high-nickel positive electrode active material can achieve high capacity, and can be applied to high-capacity, high-density rechargeable lithium batteries.

Dispersion Medium

The dispersion medium may be or include NMP (N-methyl-2-pyrrolidone).

Characteristics of Composition

The positive electrode slurry composition may have a T.I (Thixotropic Index) in a range of ≥ 0.2 to ≤ 0.7 at 25 °C.

In this range, slurry discharge and leveling in the positive electrode coater are advantageous, making the coating process advantageous.

**Positive Electrode and Rechargeable Lithium Battery:**

Some example embodiments include a positive electrode for a rechargeable lithium battery, including a positive electrode current collector and a positive electrode active material layer on the positive electrode current collector. The positive electrode active material layer includes two types of hydrogenated nitrile butadiene rubber derivatives, a conductive material, and a positive electrode active material.

Some example embodiments include a rechargeable lithium battery including the positive electrode of the aforementioned example embodiments, the negative electrode, a separator between the positive electrode and the negative electrode, and an electrolyte.

These may be manufactured using the positive electrode slurry composition for a rechargeable lithium battery according to the aforementioned example embodiments.

For example, when the positive electrode current collector is coated using the positive electrode slurry composition for a rechargeable lithium battery according to the aforementioned example embodiments, the solvent is removed, and a positive electrode active material layer including the two types of hydrogenated nitrile butadiene rubber derivatives, a conductive material, and a positive electrode active material, may be formed.

An electrode and a rechargeable lithium battery manufactured using the positive electrode slurry composition for a rechargeable lithium battery according to the aforementioned example embodiment may exhibit desired or improved cycle-life characteristics.

Accordingly, in the positive electrode for a rechargeable lithium battery according to the aforementioned example embodiments, the same descriptions may be applied, except for the 'solvent' in the aforementioned example embodiments.

Hereinafter, descriptions of a positive electrode for a rechargeable lithium battery and a rechargeable lithium battery according to the aforementioned example embodiments is described in detail, excluding any description that

overlaps with the above-described descriptions.

Positive Electrode

The positive electrode for a rechargeable lithium battery may include a current collector, and a positive electrode active material layer on the current collector. The positive electrode may be manufactured using the positive electrode slurry composition for a rechargeable lithium battery according to the aforementioned example embodiments.
The positive electrode active material layer may include a positive electrode active material, and may further include a binder and/or a conductive material.
For example, the positive electrode may further include an additive that can constitute a sacrificial positive electrode.
An amount of the positive electrode active material may be in a range of ≥ 90 wt% to ≤ 99.5 wt% based on 100 wt% of the positive electrode active material layer, and each amount of the binder and the conductive material may be in a range of ≥ 0.2 wt% to ≤ 5 wt% based on 100 wt% of the positive electrode active material layer.
The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but are not limited thereto. In the present disclosure, the second hydrogenated nitrile butadiene rubber derivative constitutes the binder.
The conductive material is included to provide electrode conductivity, and any electrically conductive material may be used as a conductive material unless the electrically conductive material causes a chemical change. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.
The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.
The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.
The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.
The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.
The silicon-carbon composite may further include crystalline carbon. For example, the silicon-carbon composite may include a core including crystalline carbon and silicon particles, and an amorphous carbon coating layer on the surface of the core.
The Si-based negative electrode active material or Sn-based negative electrode active material may be mixed

with the carbon-based negative electrode active material.

Negative Electrode

A negative electrode for a rechargeable lithium battery includes a current collector and a negative electrode active material layer on the current collector. The negative electrode active material layer includes a negative electrode active material, and may further include a binder and/or a conductive material.

For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder is a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more solvents.

In addition, when using a carbonate-based solvent, a cyclic carbonate and a chain carbonate may be mixed, and

the cyclic carbonate and the chain carbonate may be mixed in a volume ratio in a range of ≥ 1:1 to ≤ 1:9.

The electrolyte solution may further include at least one of vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

Rechargeable Lithium Battery

The rechargeable lithium battery may be classified into cylindrical, prismatic, pouch, or coin-type batteries, and the like depending on the shape thereof. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

**Example 1**

(1) Preparation of Conductive Material Composition

A conductive material composition was prepared by mixing carbon nanotube (CNT) as a conductive material, a hydrogenated nitrile butadiene rubber derivative represented by Chemical Formula A and having a weight average molecular weight of 100,000 g/mol according to a GPC method as a dispersant, and NMP as a solvent.
Based on 100 wt% of a total amount of the conductive material composition, 3 wt% of the carbon nanotube and 0.60 wt% of the hydrogenated nitrile butadiene rubber derivative of Preparation Example 1 were included.

(2) Preparation of Positive Electrode Slurry Composition

To the conductive material composition, $LiNi_{0.91}Co_{0.05}Al_{0.04}O_2$ as a positive electrode active material, a binder represented by Chemical Formula A and having a weight average molecular weight of 250,000 g/mol according to the GPC method, and NMP as a solvent were added to prepare a positive electrode slurry composition.
Based on 100 wt% of a total amount of the positive electrode slurry composition, 98.45 wt% of the positive electrode active material, 0.45 wt% of the carbon nanotube, 0.09 wt% of the binder represented by Chemical Formula A and having a weight average molecular weight of 100,000 g/mol according to the GPC method, and 1.01 wt% of the binder represented by Chemical Formula A and having a weight average molecular weight of 250,000 g/mol were included.

(3) Manufacturing of Positive Electrode

The positive electrode slurry composition was coated on a 12 μm-thick Al foil, and then dried at 100 °C and pressed to form a positive electrode active material layer.

(4) Manufacturing of Negative Electrode

Artificial graphite and silicon particles were mixed in a weight ratio of 93.5:6.5 to prepare a negative electrode active material, and the negative electrode active material: styrene-butadiene rubber binder: carboxylmethyl cellulose were mixed in a weight ratio of 97:1:2, and then dispersed in distilled water to prepare a negative electrode slurry composition.
The negative electrode slurry composition was coated on an 8 μm-thick Cu foil, and then dried at 100 °C and pressed to form a negative electrode active material layer.

(5) Preparation of Electrolyte Solution

An electrolyte solution was prepared by mixing 1.5 M lithium salt ($LiPF_6$) with a carbonate solvent including ethylene carbonate (EC): ethyl methyl carbonate (EMC): dimethyl carbonate (DMC) mixed in a volume ratio of 20:40:40.

(6) Manufacturing of Rechargeable Lithium Battery Cell

The manufactured positive and negative electrodes were assembled to obtain an electrode assembly, and then inserted into a prismatic case, and the electrolyte solution was injected thereinto to manufacture a rechargeable lithium battery cell.

**Example 2**

A positive electrode slurry composition, a positive electrode, and a rechargeable lithium battery cell of Example 2 were manufactured in the same manner as in Example 1, with a difference that a hydrogenated nitrile butadiene rubber derivative represented by Chemical Formula A and having a weight average molecular weight of 400,000 g/mol according to the GPC method was used in preparing the conductive material distribution.

**Example 3**

A positive electrode slurry composition, a positive electrode, and a rechargeable lithium battery cell of Example 2 were manufactured in the same manner as in Example 1, with a difference that a hydrogenated nitrile butadiene rubber derivative represented by Chemical Formula A and having a weight average molecular weight of 250,000 g/mol according to the GPC method was used in preparing the conductive material distribution, and in preparing the positive electrode slurry composition, a hydrogenated nitrile butadiene rubber derivative represented by Chemical Formula A and having a weight average molecular weight of 400,000 g/mol according to a GPC method was used.

**Example 4**

A positive electrode slurry composition, a positive electrode, and a rechargeable lithium battery cell of Example 2 were manufactured in the same manner as in Example 1, with a difference that a hydrogenated nitrile butadiene rubber derivative represented by Chemical Formula A and having a weight average molecular weight of 250,000 g/mol according to the GPC method was used in preparing the conductive material distribution, and in preparing the positive electrode slurry composition, a hydrogenated nitrile butadiene rubber derivative represented by Chemical Formula A and having a weight average molecular weight of 1,000,000 g/mol according to the GPC method was used.

**Comparative Example 1 (Ref.)**

$LiNi_{0.91}Co_{0.05}Al_{0.04}O_2$ as a positive electrode active material, carbon nanotube as a conductive material, and polyvinylidene fluoride as a binder were used, and NMP as a solvent was added thereto to prepare a positive electrode slurry composition.
Based on 100 wt% of a total amount of the positive electrode slurry composition, 98.45 wt% of the positive electrode active material, 0.45 wt% of the carbon nanotube, and 1.1 wt% of the polyvinylidene fluoride were included.

**Comparative Example 2**

$LiNi_{0.91}Co_{0.05}Al_{0.04}O_2$ as a positive electrode active material, carbon nanotube as a conductive material, and the hydrogenated nitrile butadiene rubber derivative of Preparation Example 2 as a binder were used, and NMP as a solvent was added thereto to prepare a positive electrode slurry composition.
Based on 100 wt% of a total amount of the positive electrode slurry composition, 98.45 wt% of the positive electrode active material, 0.45 wt% of the carbon nanotube, and 1.1 wt% of the hydrogenated nitrile butadiene rubber derivative represented by Chemical Formula A and having a weight average molecular weight of 250,000 g/mol according to the GPC method were included.

**Evaluation Example 1: Evaluation of Positive Electrode Slurry Composition**

The positive electrode slurry compositions according to Examples 1 to 4 and Comparative Examples 1 and 2 were respectively evaluated in the following method, and the results are shown in Table 1 below.
Viscosity: The positive electrode slurry compositions were measured with respect to viscosity at each shear rate by using a rheometer made by Anton Paar GmbH.
(2) T.I.: Among the viscosities at each shear rate measured by using a rheometer made by Anton Paar GmbH, T.I. of the positive electrode slurry compositions was defined according to Equation 1 below.

T.I. = Log (Viscosity at shear rate of 1 1/s/Viscosity at shear rate of 10 1/s) Equation 1:

(3) Powder Resistance: The positive slurry composition was solidified into powder and then measured with respect to powder resistance by using a 4-pin resistance meter. After applying a constant current to pins at both ends of the 4-pin resistance meter, a voltage was measured at the other two pins in the middle to obtain resistance, which was used to calculate the powder resistance by reflecting thicknesses of the positive electrode and the slurry power.

**Evaluation Example 2: Evaluation of Positive Electrode**

Each of the positive electrodes of Examples 1 to 4 and Comparative Examples 1 and 2 was evaluated in the following method, and the results are shown in Table 1 below.

(1) Adhesive Strength (Peel): Each of the positive electrodes was cut into a size of 25 mm×120 mm to prepare 20 specimens. At room temperature, after attaching a double-sided adhesive tape to a glass substrate, each positive electrode plate was attached onto the double-sided adhesive tape and roll-pressed, and after folding one end of the positive electrode plate was folded to 180 °, the other end of the positive electrode plate was folded at 1.5 mm/sec in the opposite direction to measure a force applied thereto by using UTM made by Instron.

**Evaluation Example 3: Evaluation of Rechargeable Lithium Battery Cell**

Each of the rechargeable lithium battery cells of Examples 1 to 4 and Comparative Examples 1 and 2 was

evaluated in the following method, and the results are shown in Table 1 below.

Cycle-life Characteristics: The rechargeable lithium battery cells were 300 times charged/discharged at a constant current of 0.5 C within a voltage range of 2.8 to 4.25 V to the voltage of lithium metal at 25 °C. The charge and discharge measurement results at the room temperature were used to calculate a capacity retention rate according to Equation 2 below.

Capacity retention rate %: = Discharge capacity at 100th cycle/Discharge capacity at 1st cycle: × 100. Equation 2:

Table 1:

| | Positive electrode slurry composition (wt%) | | | | Composition characteristics | | Positive electrode characteristics | Battery characteristics |
|---|---|---|---|---|---|---|---|---|
| | Active material | CNT | Dispersant | Binder | T.I. | Powder resistance (Ω.cm) | Adhesive strength (gf/mm) | Cycle-life |
| Example 1 | 98.45 | 0.45 | 0.09 (Mw=100000 g/mol) | 1.01 (Mw=250000 g/mol) | 0.33 | 12 | 2.5 | 92 |
| Example 2 | 98.45 | 0.45 | 0.09 (Mw=400000 g/mol) | 1.01 (Mw=250000 g/mol) | 0.40 | 12 | 2.6 | 92 |
| Example 3 | 98.45 | 0.45 | 0.09 (Mw=250000 g/mol) | 1.01 (Mw=400000 g/mol) | 0.45 | 13 | 2.9 | 93 |
| Example 4 | 98.45 | 0.45 | 0.09 (Mw=250000 g/mol) | 1.01 (Mw=1000000 g/mol) | 0.50 | 14 | 3.3 | 94 |
| Comparative Example 1 | 98.45 | 0.45 | - | 1.10 (PVdF) | 0.96 | 26 | 0.9 | 81 |
| Comparative Example 2 | 98.45 | 0.45 | - | 1.10 (Mw=250000 g/mol) | 0.75 | 19 | 1.9 | 88 |

The results of Examples 1 to 4 and Comparative Examples 1 and 2 showed that among the two types of hydrogenated nitrile butadiene rubber derivatives, the one having a relatively small weight average molecular weight could constitute a dispersant for the conductive material, and the one having a relatively large weight average molecular weight could constitute a binder and replace polyvinylidene fluoride.

Accordingly, the positive electrode slurry compositions for a rechargeable lithium battery including the two types of hydrogenated nitrile butadiene rubber derivatives had advantages in dispersion, and thus a small viscosity change range, resulting in being advantageous in coating processability.

Accordingly, the positive electrodes and the rechargeable lithium battery cells manufactured by using the positive electrode slurry compositions for a rechargeable lithium battery according to some example embodiments were confirmed to exhibit desired or improved cycle-life characteristics.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

**1.** A positive electrode slurry composition for a rechargeable lithium battery, the positive electrode slurry composition comprising:

two types of hydrogenated nitrile butadiene rubber derivatives having different weight average molecular weights;
a conductive material;
a positive electrode active material; and
a dispersion medium.

**2.** The positive electrode slurry composition as claimed in claim 1, wherein the two types of hydrogenated nitrile butadiene rubber derivatives comprise:

a first hydrogenated nitrile butadiene rubber derivative having a weight average molecular weight in a range of ≥ 100,000 g/mol to ≤ 400,000 g/mol; and
a second hydrogenated nitrile butadiene rubber derivative having a weight average molecular weight in a range of ≥ 250,000 g/mol to ≤ 1,000,000 g/mol,
wherein the first hydrogenated nitrile butadiene rubber derivative and the above second hydrogenated nitrile butadiene rubber derivative have different weight average molecular weights.

**3.** The positive electrode slurry composition as claimed in claim 1 or 2, wherein:

the first hydrogenated nitrile butadiene rubber derivative has a weight average molecular weight in a range of ≥ 100,000 g/mol to ≤ 200,000 g/mol; and
the second hydrogenated nitrile butadiene rubber derivative has a weight average molecular weight in a range of ≥ 250,000 g/mol to ≤ 1,000,000 g/mol.

**4.** The positive electrode slurry composition as claimed in any of the claims 1 to 3, wherein a weight ratio of the first hydrogenated nitrile butadiene rubber derivative and the second hydrogenated nitrile butadiene rubber derivative is in a range of ≥ 1:1 to ≤ 1:20.

**5.** The positive electrode slurry composition as claimed in any of the claims 1 to 4, wherein based on 100 wt% of a total amount of the positive electrode slurry composition:

the first hydrogenated nitrile butadiene rubber derivative is included in an amount in a range of ≥ 0.01 wt% to ≤ 0.5 wt%; and
the second hydrogenated nitrile butadiene rubber derivative is included in an amount in a range of ≥ 0.1 wt% to ≤ 5 wt%,

**6.** The positive electrode slurry composition as claimed in any of the claims 1 to 5, wherein the first hydrogenated nitrile butadiene rubber derivative and the second hydrogenated nitrile butadiene rubber derivative each independently comprise:

a first structural unit derived from acrylonitrile represented by Chemical Formula 1;
a second structural unit including a hydrogenated butadiene-derived structural unit represented by Chemical Formula 2A and a butadiene-derived structural unit represented by Chemical Formula 2B;
a third structural unit represented by Chemical Formula 3; and
a fourth structural unit represented by Chemical Formula 4:

Chemical Formula 1:

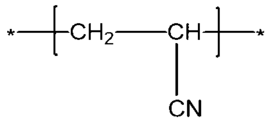
;

Chemical Formula 2A:

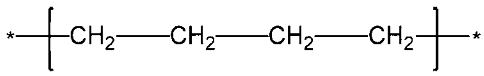
;

Chemical Formula 2B:

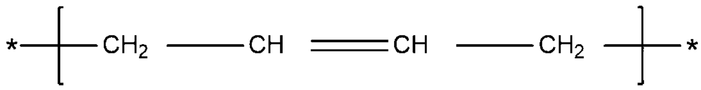
;

Chemical Formula 3:

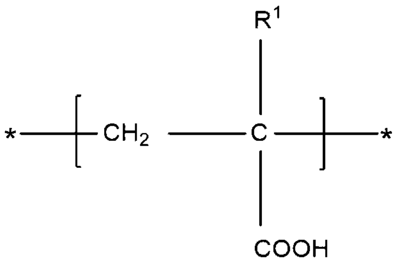
;

Chemical Formula 4:

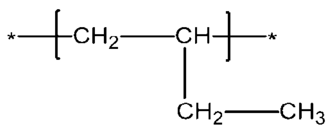
;

wherein, in Chemical Formula 3,
$R^1$ comprises one of hydrogen, a substituted or unsubstituted C1 to C20 alkyl group, an ester group (-COOR, where R is a substituted or unsubstituted C1 to C20 alkyl group), a cyano group (-CN), a pyrrolidonyl group ($-C_3H_5NHCO$), a carboxyl group (-COOH), a caprolactamyl group ($-NCOC_5H_{10}$), a morpholinyl group $-NC_4H_8O$), a hydroxyl group (-OH), an amino group ($-NH_2$), a vinyl group ($-CH=CH_2$), an epoxy group ($-COCH_2$), and a thiol group (-SH).

**7.** The positive electrode slurry composition as claimed in any of the claims 1 to 6, wherein the conductive material comprises a carbon nanotube (CNT).

8. The positive electrode slurry composition as claimed in any of the claims 1 to 7, wherein a weight ratio of the first hydrogenated nitrile butadiene rubber derivative and the conductive material is in a range of ≥ 1:1 to ≤ 1:10.

9. The positive electrode slurry composition as claimed in any of the claims 1 to 8, wherein:
based on 100 wt% of a total amount of the positive electrode slurry composition, the conductive material is included in amount that is equal to or greater than ≥ 0 wt% and less than or equal to ≤ 5 wt%.

10. The positive electrode slurry composition as claimed in any of the claims 1 to 9, wherein the positive electrode active material comprises a lithium nickel-based oxide.

11. The positive electrode slurry composition as claimed in in any of the claims 1 to 10, wherein:
based on 100 wt% of a total amount of the positive electrode slurry composition, the positive electrode active material is included in amount that is equal to or greater than ≥ 90 wt% to ≤ 99.5 wt%.

12. The positive electrode slurry composition as claimed in in any of the claims 1 to 11, wherein the dispersion medium comprises NMP (N-methyl-2-pyrrolidone).

13. The positive electrode slurry composition as claimed in any of the claims 1 to 12, wherein the positive electrode slurry composition has a T.I (Thixotropic Index) in a range of ≥ 0.2 to ≤ 0.7 at 25 °C.

14. A positive electrode (10) for a rechargeable lithium battery (100), the positive electrode (10) comprising:

a positive electrode current collector and a positive electrode active material layer on the positive electrode current collector,
wherein the positive electrode active material layer comprises:

two types of hydrogenated nitrile butadiene rubber derivatives having different weight average molecular weights;
a conductive material; and
a positive electrode active material.

15. A rechargeable lithium battery (100), comprising

the positive electrode (10) as claimed in claim 14;
a negative electrode (20);
a separator (30) between the positive electrode and the negative electrode; and
an electrolyte solution.

【FIG. 1】

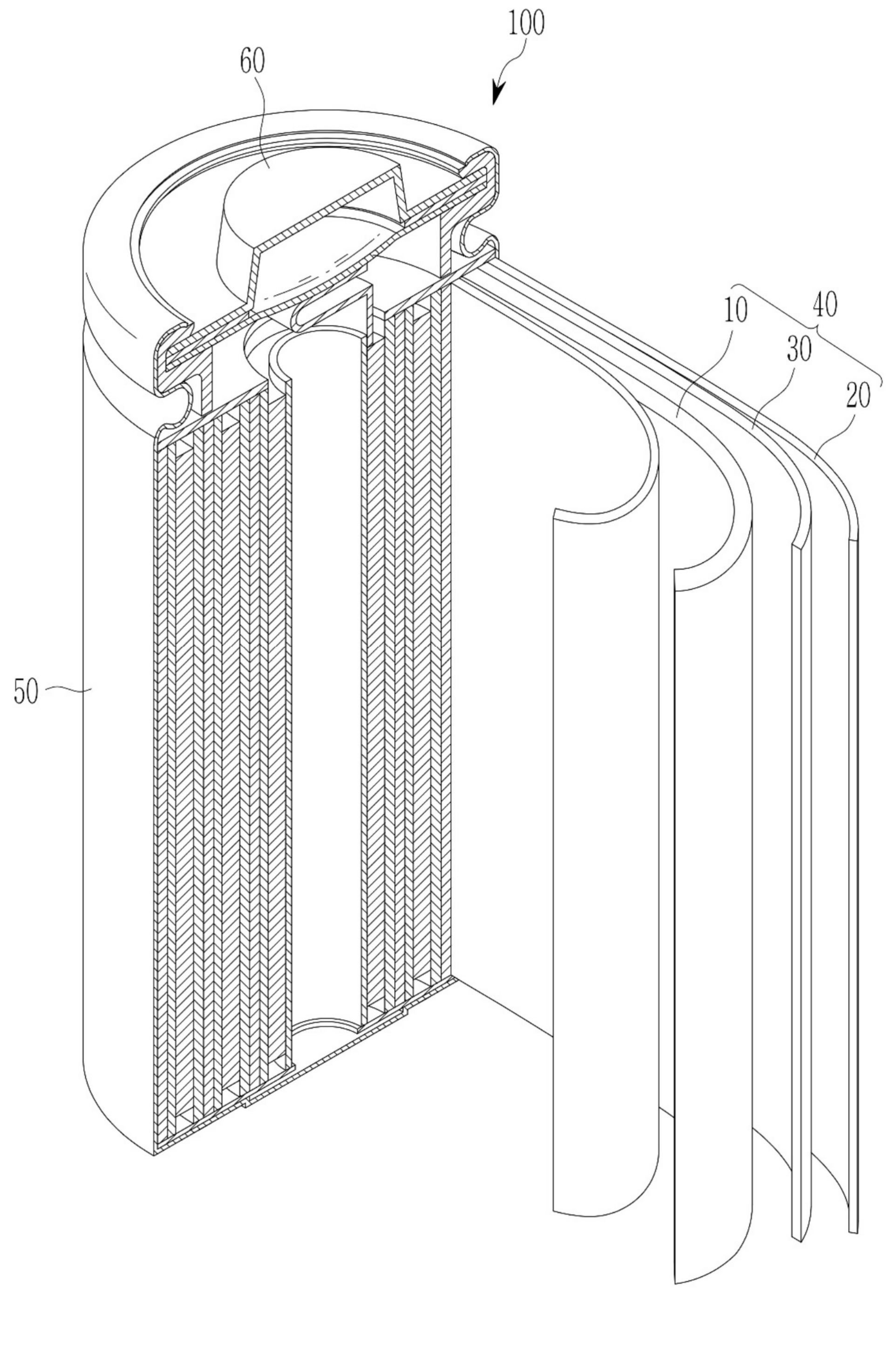

【FIG. 2】

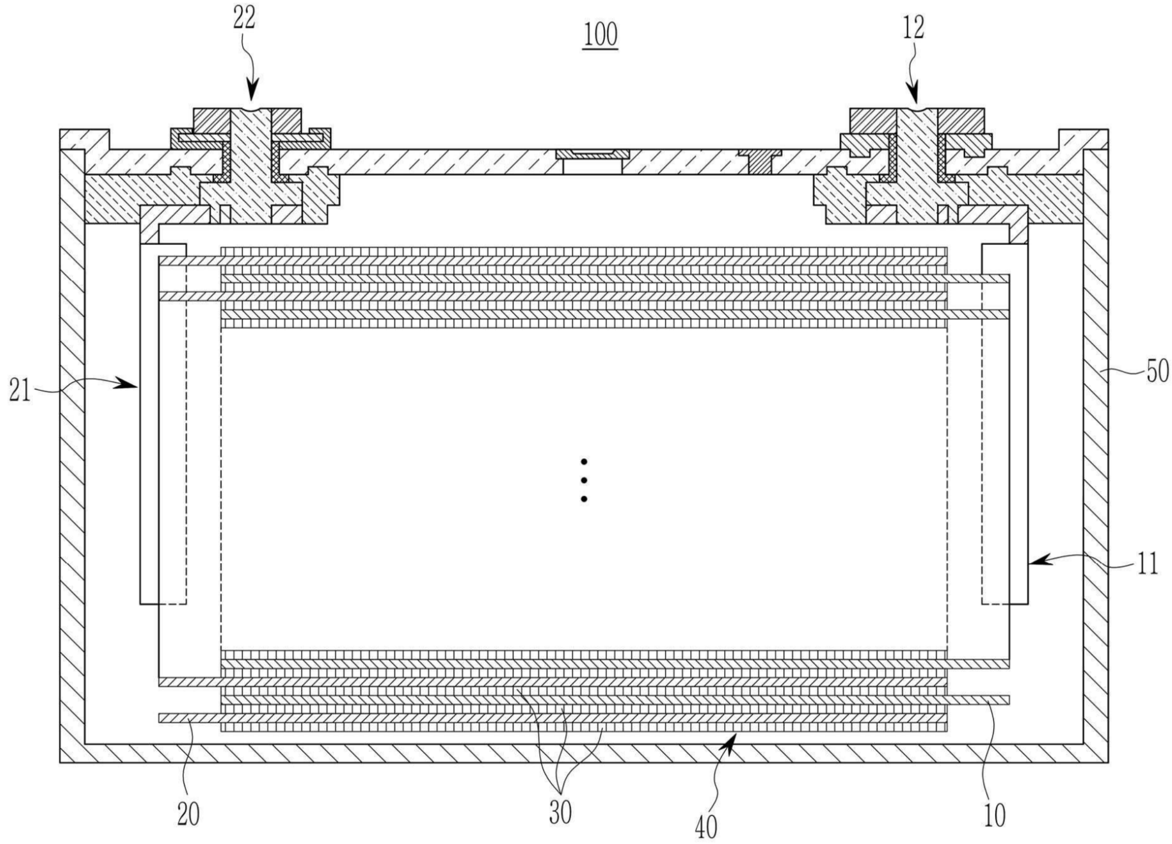

【FIG. 3】

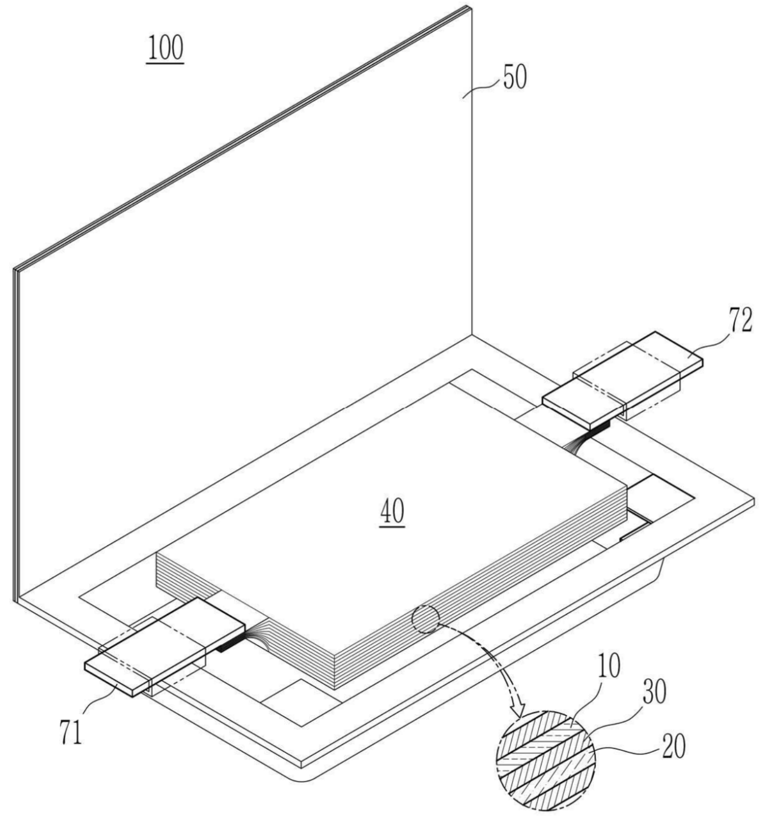


【FIG. 4】

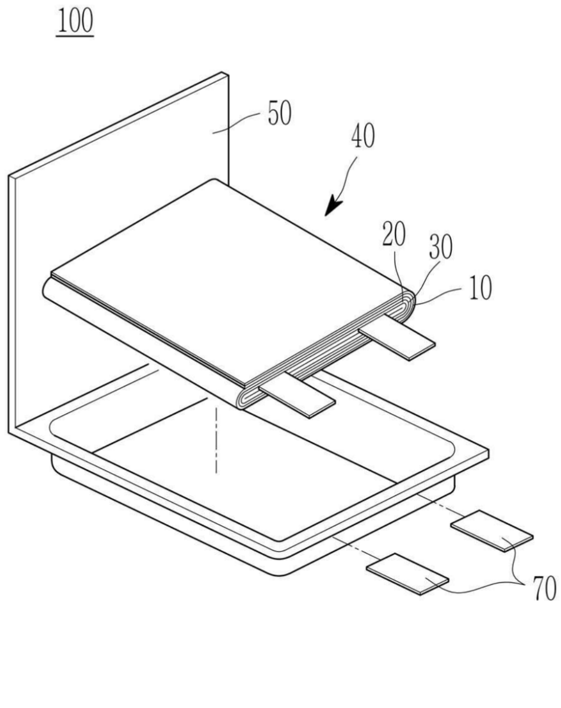

Europäisches Patentamt
European Patent Office
Office européen des brevets

# EUROPEAN SEARCH REPORT

Application Number
EP 25 21 6742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2024 0095060 A (LG ENERGY SOLUTION LTD [KR]) 25 June 2024 (2024-06-25)<br>* paragraphs [0061], [0091], [0108], [0118], [0208], [0210] *<br>* claims 1-18 *<br>----- | 1-15 | INV.<br>H01M4/131<br>H01M4/62<br>H01M10/0525 |
| A | US 2018/233734 A1 (AHN BYOUNG HOON [KR] ET AL) 16 August 2018 (2018-08-16)<br>* claims 1-15 *<br>----- | 1-15 | |

TECHNICAL FIELDS SEARCHED (IPC)

H01M

The present search report has been drawn up for all claims

1

| Place of search | Date of completion of the search | Examiner |
|---|---|---|
| The Hague | 18 March 2026 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 21 6742

This annex lists the patent family members relating to the patent documents cited in the above-mentioned European search report. The members are as contained in the European Patent Office EDP file on
The European Patent Office is in no way liable for these particulars which are merely given for the purpose of information.

18-03-2026

| Patent document cited in search report | Publication date | Patent family member(s) | Publication date |
|---|---|---|---|
| KR 20240095060 A | 25-06-2024 | CN 119487647 A | 18-02-2025 |
| | | EP 4535456 A1 | 09-04-2025 |
| | | JP 2025522200 A | 11-07-2025 |
| | | KR 20240095060 A | 25-06-2024 |
| | | US 20260005248 A1 | 01-01-2026 |
| | | WO 2024128852 A1 | 20-06-2024 |
| US 2018233734 A1 | 16-08-2018 | CN 107949940 A | 20-04-2018 |
| | | EP 3331072 A1 | 06-06-2018 |
| | | JP 6636141 B2 | 29-01-2020 |
| | | JP 2018530113 A | 11-10-2018 |
| | | KR 20170113212 A | 12-10-2017 |
| | | PL 3331072 T3 | 31-12-2019 |
| | | US 2018233734 A1 | 16-08-2018 |

EPO FORM P0459

For more details about this annex : see Official Journal of the European Patent Office, No. 12/82